# EUROPÄISCHE PATENTSCHRIFT

(11) **EP 3 000 145 B1**
(45) Veröffentlichungstag und Bekanntmachung des Hinweises auf die Patenterteilung: **08.11.2017**
(21) Anmeldenummer: 14725359.5
(22) Anmeldetag: 07.05.2014
(51) Int. Cl.: H01M 8/023, H01M 8/0232, H01M 8/0245, H01M 8/0273, B22F 3/11, B22F 7/00, B22F 3/02, B23K 26/00, B23K 26/354, H01M 8/124

(54) **BRENNSTOFFZELLE**
FUEL CELL
PILE À COMBUSTIBLE

(30) Priorität: 21.05.2013 DE 102013008473
(43) Veröffentlichungstag der Anmeldung: 30.03.2016
(73) Patentinhaber: PLANSEE COMPOSITE MATERIALS GMBH, DE-86983 Lechbruck am See (DE)
(72) Erfinder: FRANCO, Thomas, 70184 Stuttgart (DE); HAYDN, Markus, 6600 Breitenwang (AT); KÖGL, Markus, 6682 Vils (AT); RÜTTINGER, Matthias, 6600 Reutte (AT); ZOBL, Gebhard, 6677 Schattwald (AT)
(74) Vertreter: Ciesla, Bettina
(86) Internationale Anmeldenummer: PCT/EP2014/001219
(87) Internationale Veröffentlichungsnummer: WO 2014/187534

(56) Entgegenhaltungen:
- WO-A1-98/35398
- WO-A1-2009/128849
- DE-A1- 10 210 293
- DE-A1-102007 034 967
- DE-C1- 10 135 336

## Beschreibung

Die Erfindung betrifft ein Trägersubstrat für eine metallgestützte elektrochemische Funktionseinrichtung, ein Herstellungsverfahren für ein derartiges Trägersubstrat und deren Anwendung in Brennstoffzellen.

Ein mögliche Anwendungsgebiet für das erfindungsgemäße Trägersubstrat ist bei Hochtemperatur-Brennstoffzellen (SOFC; solid oxide fuel cell), die typischerweise bei einer Betriebstemperatur von ca. 600-1000°C betrieben werden. In der Basiskonfiguration umfasst die elektrochemisch aktive Zelle einer SOFC einen gasdichten Feststoffelektrolyten, der zwischen einer gasdurchlässigen Anode und gasdurchlässigen Kathode angeordnet ist. Der Feststoffelektrolyt ist dabei meist aus einem festen keramischen Werkstoff aus Metalloxid, der Sauerstoffionen leitet, Elektronen aber nicht. Konzeptionell ist derzeit das planare SOFC System (auch Flachzellenkonzept genannt) das weltweit bevorzugte Zellkonzept. Dabei werden einzelne elektrochemisch aktive Zellen zu einem sogenannten Stack gestapelt und durch metallische Komponenten, sogenannte Interkonnektoren oder Bipolarplatten, verbunden. Bei SOFC Systemen sind aus dem Stand der Technik verschiedene Ausführungsformen bekannt, die im Folgenden kurz skizziert werden sollen. Bei einer ersten Variante, technisch am weitesten fortgeschritten und bereits in der Markteinführungsphase, ist der Elektrolyt die mechanisch tragende Zellkomponente ("Electrolyt Supported Cell", ESC). Die Schichtdicke des Elektrolyten ist hierbei verhältnismäßig groß, ca. 100-150 µm und besteht meist aus Yttriumoxid (YSZ) oder Scandiumoxid (ScSZ) stabilisierten Zirkoniumdioxid. Um eine ausreichende Ionenleiffähigkeit des Elektrolyten zu erzielen müssen diese Brennstoffzellen bei einer verhältnismäßig hohen Betriebstemperatur von ca. 850-1000°C betrieben werden. Diese hohe Betriebstemperatur führt zu hohen Anforderungen an die verwendeten Materialien.
Die Bestrebungen nach niedrigerer Betriebstemperatur führten in Folge zur Entwicklung von unterschiedlichen Dünnschichtsystemen. Dazu zählen Anoden- bzw. Kathoden gestützte ("Anode-Supported Cell" bzw. "Cathodesupported Cell") SOFC Systeme, bei denen ein relativ dickes (mind. ca 200µm) mechanisch tragendes keramisches Anoden- bzw. Kathodensubstrat mit einer dünnen, elektrochemisch aktiven Anoden- bzw. Kathodenfunktionsschicht verbunden ist. Da die Elektrolytschicht keine mechanisch tragende Rolle mehr auszuführen hat, kann diese verhältnismäßig dünn ausgeführt werden und die Betriebstemperatur aufgrund des geringeren ohmschen Widerstands dementsprechend reduziert werden.
Neben diesen rein keramischen Systemen wurden als jüngste Generation SOFC Dünnschichtsysteme entwickelt, die auf einem metallischen Trägersubstrat basieren, sogenannte Metallgestützte SOFC ("Metall-supported Cell", MSC). Diese metallisch-keramischen Verbundsysteme zeigen gegenüber rein keramischen Dünnschichtsystemen Vorteile hinsichtlich der thermischen und redox Zyklierbarkeit sowie der mechanischen Stabilität und können auf Grund ihres Dünnschichtelektrolyten zudem bei einer noch niedrigeren Betriebstemperatur von ca. 600° bis 800°C betrieben werden. Aufgrund ihrer spezifischen Vorteile sind sie insbesondere für mobile Anwendungen, wie beispielsweise zur elektrischen Versorgung von Personenkraftwagen oder Nutzfahrzeugen (APU - auxiliary power unit) geeignet. Im Vergleich zu vollkeramischen SOFC Systemen zeichnen sich die metallisch-keramischen MSC Systeme durch deutlich reduzierte Materialkosten sowie durch neue Möglichkeiten der Stackintegration aus, wie beispielsweise durch Löt- oder Schweißprozesse. Eine exemplarische MSC besteht aus einem ca. 1 mm dicken porösen, dadurch gasdurchlässigen, metallischen Trägersubstrat, auf das eine 60-70µm dicke keramische Verbundstruktur, der eigentlich elektrochemisch aktiven Schichtanordnung mit dem Elektrolyten und den Elektroden, angeordnet ist. Typischerweise ist die Anode dem Trägersubstrat zugewandt und in der Abfolge der Schichtanordnung näher am Metallsubstrat als die Kathode.
Im Betrieb einer SOFC wird der Anode Brennstoff (beispielsweise Wasserstoff oder herkömmliche Kohlenwasserstoffe, wie Methan, Erdgas, Biogas, ...) zugeführt und dort katalytisch unter Abgabe von Elektronen oxidiert. Die Elektronen werden aus der Brennstoffzelle abgeleitet und fließen über einen elektrischen Verbraucher zur Kathode. An der Kathode wird ein Oxidationsmittel (beispielsweise Sauerstoff oder Luft) durch Aufnahme der Elektronen reduziert. Der elektrische Kreislauf schließt sich, indem die Sauerstoffionen über den Elektrolyten zur Anode fließen und an den entsprechenden Grenzflächen mit dem Brennstoff reagieren.

Ein herausforderndes Problem bei der Entwicklung von Brennstoffzellen ist die zuverlässige Trennung der beiden Prozessgasräume, also der Trennung des Brennstoffes, der der Anode zugeführt wird, vom Oxidationsmittel, das der Kathode zugeführt wird. Diesbezüglich verspricht die MSC einen großen Vorteil, da mittels Schweiß- oder metallischer Lötprozesse auf kostengünstige Weise Abdichtung und langzeitbeständige Stack-Konzepte realisiert werden können. Eine exemplarische Variante für eine Brennstoffzelleneinheit wird in
WO 2008/138824 vorgestellt. Bei dieser Brennstoffzelleneinheit wird ein gasdurchlässiges Substrat mit den elektrochemisch aktiven Schichten in eine relativ komplexe Rahmeneinrichtung mit einer fensterartigen Öffnung eingefasst und verlötet. Aufgrund ihrer Komplexität ist diese Rahmeneinrichtung aber nur sehr aufwendig zu realisieren.
EP 1 278 259 offenbart eine Brennstoffzelleneinheit, bei der das gasdurchlässige Substrat mit den elektrochemisch aktiven Schichten in einen Blechrahmen mit einer fensterartigen Öffnung eingefasst wird, in das noch Öffnungen für die Zu- und Abfuhr des Brenngases vorgesehen sind. Ein gasdichter Gasraum wird dadurch geschaffen, dass das Metallsubstrat, das am Rand verpresst wird, in diesen Blechrahmen eingeschweißt und dieser anschließend mit einer Kontaktplatte, die als Interkonnektor wirkt, gasdicht verbunden wird. Zur zuverlässigen Trennung der beiden Prozessgasräume wird der gasdichte Elektrolyt nach der Fügung über die Schweißnaht gezogen.
Eine Weiterentwicklung stellt die in der DE 10 2007 034 967 beschriebene pulvermetallurgisch hergestellte Variante dar, bei der der Blechrahmen und das metallische Trägersubstrat als integraler Bauteil ausgeführt sind. Dabei wird das metallische Trägersubstrat im Randbereich gasdicht verpresst und die benötigten Brenngas- und Abgasöffnungen zur Brenngaszufuhr bzw. Abgasabfuhr werden im Randbereich des Trägersubstrats integriert. Ein gasdichter Gasraum wird dadurch geschaffen, dass das Metallsubstrat nach einem Sinterprozess mit Hilfe einer Presse und entsprechend geformten Pressstempeln am Randbereich gasdicht verpresst wird und anschließend mit einer Kontaktplatte, die als Interkonnektor wirkt, im Randbereich verschweißt wird. Nachteilig ist, dass eine gasdichte Verdichtung des Randbereichs nur äußerst schwierig zu erreichen ist, da die für das Trägersubstrat typischerweise verwendeten pulvermetallurgischen Legierungen, die den hohen Materialanforderungen beim Betrieb einer SOFC genügen, vergleichsweise spröde und schwer umformbar sind. Beispielsweise sind für die gasdichte Umformung eines Trägersubstrats aus der Fe-Cr Legierung in
DE 10 2007 034 967 Presskräfte in der Größenordnung von mehr als 1200 Tonnen erforderlich. Dies bedingt nicht nur hohe Investitionskosten für eine entsprechend leistungsstarke Presse, sondern zudem auch hohe Betriebskosten, größeren Verschleiß am Presswerkzeug und einen höheren Wartungsaufwand für die Presse.
Ein anderer alternativer Ansatz für einen schweißtechnisch integrierbaren MSC Stack basiert auf einem mittig perforierten Blech mit dichtem Randbereich als metallischem Trägersubstrat (WO 0235628). Nachteilig bei diesem Ansatz ist, dass die Zuführung des Brenngases zur Elektrode, die aus Effizienzgründen über die Fläche der Elektrode möglichst homogen erfolgen soll, nur unbefriedigend gelöst wird.

Der vorliegenden Erfindung liegt die Aufgabe zugrunde, ein Trägersubstrat der eingangs genannten Art zu schaffen, das beim Einsatz in einer elektrochemischen Funktionseinrichtung, insbesondere in einer Hochtemperatur-Brennstoffzelle, auf einfache und kostengünstige Art und Weise eine zuverlässige Trennung der beiden Prozessgasräume ermöglicht.

Diese Aufgabe wird durch die Gegenstände und Verfahren mit den Merkmalen gemäß den unabhängigen Patentansprüchen gelöst.
Gemäß einem Ausführungsbeispiel der vorliegenden Erfindung wird bei einem pulvermetallurgisch hergestellten, plattenförmigen, metallischen Trägersubstrat mit den Merkmalen des Oberbegriffs von Anspruch 1 erfindungsgemäß vorgeschlagen, dass in einem Randbereich des Trägersubstrats ein Oberflächenabschnitt auf der Zell-zugewandten Seite des Trägersubstrats gebildet wird, der eine Schmelzphase des Trägersubstratmaterials aufweist. Erfindungsgemäß weist der unter dem die Schmelzphase aufweisende Oberflächenabschnitt liegende Bereich zumindest abschnittsweise eine höhere Porosität auf als der darüber angeordnete die Schmelzphase aufweisende Oberflächenabschnitt, wobei eine flächige Barriere entlang der Oberfläche des Trägersubstrats gebildet wird. "Zell-zugewandt" bezeichnet dabei jene Seite des Trägersubstrats, an die in einem nachfolgenden Prozessschritt in einem zentralen Bereich des porösen Trägersubstrats ein Schichtstapel mit elektrochemisch aktiven Schichten aufgebracht wird. Normalerweise wird auf das Trägersubstrat die Anode, auf die Anode der gasdichte und sauerstoffionenleitende Elektrolyt und auf den Elektrolyt die Kathode angeordnet. Die Abfolge der Elektrodenschichten kann aber auch umgekehrt sein und der Schichtstapel kann auch noch zusätzliche Funktionsschichten aufweisen, beispielsweise kann zwischen Trägersubstrat und der ersten Elektrodenschicht eine Diffusionsbarriereschicht vorgesehen sein.
Gasdicht bedeutet, dass die Leckrate bei ausreichender Gasdichtigkeit standardmäßig < 10⁻³ mbar l/cm² s beträgt (gemessen unter Luft mit Druckanstiegsmethode (Fa. Dr. Wiesner, Remscheid, Typ: Integra DDV) bei einer Druckdifferenz dp = 100 mbar).

Der erfindungsgemäßen Lösung liegt die Erkenntnis zugrunde, dass es nicht erforderlich ist, wie im Stand der Technik in DE 10 2007 034 967 vorgeschlagen, den kompletten Randbereich des Trägersubstrats gasdicht zu verpressen, sondern dass der ursprünglich gasdurchlässige poröse Randbereich oder vorverdichtete poröse Randbereich mittels eines Oberflächennachbehandlungsschritts, der zur Bildung einer Schmelzphase aus dem Material des Trägersubstrats in einem oberflächennahen Bereich führt, gasdicht gemacht werden kann. Ein solcher Oberflächennachbehandlungsschritt kann durch lokales, oberflächliches Aufschmelzen des porösen Trägersubstratmaterials, d.h. kurzes lokales Erhitzen auf eine Temperatur höher als die Schmelztemperatur, erzielt werden und mittels mechanischer, thermischer oder chemischer Verfahrensschritte erfolgen, beispielsweise mittels Schleifen, Strahlen oder durch Applikation von Laser-, Elektronen oder Ionenstrahlen. Bevorzugt wird ein die Schmelzphase aufweisender Oberflächenabschnitt durch Einwirken gebündelter Strahlen von hochenergetischen Photonen, Elektronen, Ionen oder anderer geeigneter fokussierbarer Energiequellen auf die Oberfläche des Randbereichs bis in eine bestimmte Einwirktiefe erzielt. Durch das lokale Aufschmelzen und rasche Abkühlen nach dem Aufschmelzen bildet sich in diesem Bereich ein verändertes metallisches Gefüge mit verschwindender bzw. äußerst geringer Restporosität.

Das erfindungsgemäße metallene Trägersubstrat wird pulvermetallurgisch hergestellt und besteht vorzugsweise aus einer Eisen-Chrom Legierung. Das Substrat kann gemäß AT 008 975 U1 herstellt sein, es kann daher aus einer Fe-Basis Legierung mit Fe >50 Gew. % und 15 bis 35 Gew. % Cr; 0,01 bis 2 Gew. % eines oder mehrerer Elemente der Gruppe Ti, Zr, Hf, Mn, Y, Sc, Seltenerdmetalle; 0 bis 10 Gew. % Mo und/oder Al; 0 bis 5 Gew. % eines oder mehrerer Metalle der Gruppe Ni, W, Nb, Ta; 0,1 bis 1 Gew. % O; Rest Fe und Verunreinigungen bestehen, wobei zumindest ein Metall der Gruppe Y,Sc, Seltenerdmetalle und zumindest ein Metall der Gruppe Cr, Ti, Al, Mn ein Mischoxid bilden. Zur Bildung des Substrats wird vorzugsweise eine Pulverfraktion mit einer Partikelgröße <150µm, insbesondere <100µm verwendet. So kann die Oberflächenrauhigkeit ausreichend klein gehalten werden, um eine gute Beschichtbarkeit für funktionale Schichten zu gewährleisten. Nach dem Sinterprozess weist das poröse Substrat eine Porosität von vorzugsweise 20 bis 60%, insbesondere 40 bis 50% auf. Die Dicke des Substrats kann vorzugsweise 0,3 bis 1,5 mm betragen. Bevorzugt wird das Substrat anschließend im Randbereich oder Teilen des Randbereichs verdichtet, die Verdichtung im Randbereich kann durch uniaxiales Pressen oder Profilwalzen erfolgen. Der Randbereich weist in diesem Fall eine höhere Dichte und eine geringere Porosität auf als der zentrale Bereich. Vorzugsweise wird beim Verdichtungsprozess ein kontinuierlicher Übergang zwischen dem Substratbereich und dem dichteren Randbereich angestrebt, um Spannungen im Substrat zu vermeiden. Dieser Verdichtungsprozess ist vorteilhaft, damit im nachfolgenden Oberflächenbearbeitungsschritt die lokale Volumenänderung nicht zu ausgeprägt ist und Verzug oder Verspannungen im Gefüge des Trägersubstrats hervorruft. Es hat sich herausgestellt, dass für den Randbereich eine Porosität kleiner als 20%, vorzugsweise eine Porosität von 4 bis 12% besonders vorteilhaft ist. Diese Restporosität garantiert noch keine Gasundurchlässigkeit, da der Randbereich nach diesem Verdichtungsprozess Oberflächenporen mit einer Größenausdehnung von bis zu 50 µm aufweisen kann.

Als nächster Schritt erfolgt zumindest auf einem Teil der zell-zugewandten Oberfläche des Randbereichs ein Oberflächenbehandlungsschritt, der zur Bildung einer Schmelzphase aus dem Material des Trägersubstrats in einem Oberflächenabschnitt führt. Der die Schmelzphase aufweisende Oberflächenabschnitt erstreckt sich in der Regel, den Außenumfang des zentralen Bereichs des Trägersubstrats umlaufend, bis an die Außenkanten des Randbereichs, an dem das Trägersubstrat an eine Kontaktplatte, häufig auch als Interkonnektor bezeichnet, gasdicht, beispielsweise durch eine umlaufende Schweißnaht, verbunden wird. Es bildet sich dadurch eine flächige Barriere entlang der Oberfläche des Trägersubstrats, die vom zentralen Bereich des Trägersubstrats, an dem der Schichtstapel mit dem gasdichten Elektrolyten aufgebracht wird, bis zur Schweißnaht, die einen gasdichten Abschluss zum Interkonnektor bildet, reicht.
Ein solcher Oberflächenbehandlungsschritt, der zur oberflächlicher Aufschmelzung führt, kann mittels mechanischer, thermischer oder chemischer Verfahrensschritte erfolgen, beispielsweise mittels Schleifen, Strahlen oder durch Einwirken gebündelter Strahlen von hochenergetischen Photonen, Elektronen, Ionen oder anderer geeigneter fokussierbarer Energiequellen auf die Oberfläche des Randbereichs.
Durch das lokale oberflächliche Aufschmelzen und rasche Abkühlen bildet sich ein verändertes metallisches Gefüge, die Restporosität ist äußerst gering. Das Aufschmelzen kann ein einziges Mal oder auch mehrmals hintereinander erfolgen. Die Aufschmelztiefe ist dabei an das Erfordernis der Gasdichtheit des oberflächennahen Bereichs anzupassen, eine Aufschmelztiefe von mindestens 1 µm, insbesondere 15 µm bis 150 µm, besonders bevorzugt 15 µm bis 60 µm, hat sich als geeignet herausgestellt. Der die Schmelzphase aufweisende Oberflächenabschnitt erstreckt sich daher von der Oberfläche des Trägersubstrats gemessen mindestens 1 µm, insbesondere 15 µm bis 150 µm, besonders bevorzugt 15 µm bis 60 µm, von der Oberfläche ins Trägersubstrat hinein.
Im die Schmelzphase aufweisenden Oberflächenabschnitt können neben der Schmelzphase noch andere Phasen vorliegen, beispielsweise amorphe Strukturen. Besonders bevorzugt ist der die Schmelzphase aufweisenden Oberflächenabschnitt vollständig aus der Schmelzphase des Trägersubstratmaterials gebildet. Der Aufschmelzprozess führt im Randbereich zu einer sehr glatten Oberfläche von geringer Oberflächenrauhigkeit. Dies erlaubt eine gute Beschichtbarkeit für funktionale Schichten wie einer Elektrolytschicht, die, wie nachfolgend beschrieben, optional zur besseren Abdichtung der Prozessgasräume auch über einen Teil des Randbereichs aufgebracht wird.
Um eine durch den Aufschmelzprozess bedingte Schrumpfung des Trägersubstratrandbereichs zu vermindern, kann vor dem Aufschmelzprozess ein Pulver oder eine Pulvermischung aus dem Ausgangsmaterial des Trägersubstrats mit kleiner Partikelgröße zur Füllung der oberflächlichen offenen Poren aufgetragen werden. Im Anschluss daran erfolgt der oberflächliche Aufschmelzprozess. Durch diesen Schritt wird die Maßhaltigkeit der Trägersubstratform verbessert.
Besonders vorteilhaft ist, dass der Randbereich des Trägersubstrats nicht mehr wie nach dem Stand der Technik, beispielsweise DE 10 2007 034 967, gasdicht verpresst werden muss, sondern eine Dichte und Porosität aufweisen kann, bei der eine Fluiddichtheit nicht notwendigerweise gegeben ist. Somit können bei der Herstellung erhebliche Kosteneinsparungen erzielt werden.

Das erfindungsgemäße Trägersubstrat ist für eine elektrochemische Funktionseinrichtung geeignet, bevorzugt für eine Festelektrolyt-Brennstoffzelle, die eine Betriebstemperatur bis zu 1000°C aufweisen können. Es kann aber auch beispielsweise in der Membrantechnologie zur elektrochemischen Gastrennung eingesetzt werden.

Im Zuge der Entwicklungen von MSC Systemen wurden verschiedene Ansätze verfolgt, in denen verschiedene Trägersubstratanordnungen mit unterschiedlicher Integrationstiefe zur Anwendung kommen.
Erfindungsgemäß wird für eine erste Variante eine Trägersubstratanordnung vorgeschlagen, die ein erfindungsgemäßes Trägersubstrat aufweist, das von einer Rahmeneinrichtung aus elektrisch leitfähigem Material umfasst wird, wobei die Rahmeneinrichtung das Trägersubstrat elektrisch kontaktiert und die Rahmeneinrichtung mindestens eine Gasdurchtrittsöffnung aufweist. Diese Gasdurchtrittsöffnungen dienen dabei zur Zu- und Abfuhr des Prozessgases, beispielsweise des Brenngases. Ein gasdichter Gasraum wird dadurch geschaffen, dass die Trägersubstratanordnung mit einer Kontaktplatte, die als Interkonnektor wirkt, gasdicht verbunden wird. Durch die Rahmeneinrichtung und den Interkonnektor wird also eine Art Gehäuse gebildet und so ein fluiddichter Prozessgasraum realisiert. Der die Schmelzphase aufweisende Oberflächenabschnitt des Trägersubstrats erstreckt sich dabei vom Außenumfang des zentralen Bereichs bis zu den Außenkanten des Randbereichs bzw. bis zur der Stelle, an der das Trägersubstrat mit der Rahmeneinrichtung durch Schweißen oder Löten verbunden ist.

In einer zweiten Ausführungsform ist das Trägersubstrat und die Rahmeneinrichtung als integraler Bauteil ausgeführt. Mittels Stanzen, Schneiden, Prägen oder vergleichbarer Verfahren werden im Randbereich auf gegenüberliegenden Seiten des plattenförmigen Trägersubstrats Gasdurchtrittsöffnungen gebildet. Diese Öffnungen sind für die Zu- und Abfuhr des Prozessgases, insbesondere des Brenngases vorgesehen. Das Trägersubstrat wird im Randbereich, der Gasdurchtrittsöffnungen aufweist, durch oberflächliches Aufschmelzen nachbehandelt. Der oberflächennachbehandelte Bereich ist dabei so gewählt, dass ein zusammenhängender Abschnitt gebildet wird, der zumindest einen Teil der Gasdurchtrittsöffnungen, bevorzugt jene Öffnungen, die für die Zu- und Ableitung der Prozessgase (Brenn- und Oxidgase) vorgesehen sind, umrandet. Der die Schmelzphase aufweisende Oberflächenabschnitt ist ein zusammenhängender Abschnitt über zumindest einen Teil des Randbereichs und erstreckt sich, den Außenumfang des zentralen Bereichs umlaufend, einerseits bis zu den Kanten der eingeschlossenen Gasdurchtrittsöffnungen, andererseits bis zu den Außenkanten des Randbereichs bzw. bis zur der Stelle, an der das Trägersubstrat mit der Interkonnektorplatte durch Schweißen oder Löten verbunden ist. Um im Randbereich von Gasdurchtrittsöffnungen in vertikaler Richtung über die Dicke des Trägersubstrats Gasdichtheit zu gewährleisten, ist in der Umgebung von Randkanten die Schmelzphase über die gesamte Dicke des Trägersubstrats ausgebildet, d.h. der die Schmelzphase aufweisende Oberflächenabschnitt erstreckt sich am Rand von Gasdurchtrittsöffnungen über die gesamte Dicke des Trägersubstrats bis zur gegenüberliegenden Oberfläche hindurch. Dieses seitliche Abdichten des Trägersubstrats am Rand von Gasdurchtrittsöffnungen wird automatisch erreicht, wenn diese Öffnungen beispielsweise mittels thermischer Prozesse wie Laser-, Elektronen-, Ionen-, Wasserstrahl- oder Reibschneiden gefertigt werden.
Die Erfindung betrifft ferner eine Brennstoffzelle, die eine der erfindungsgemäßen Trägersubstrate bzw. Trägersubstratanordnungen aufweist, wobei ein Schichtstapel mit elektrochemisch aktiven Schichten, insbesondere mit Elektroden-, Elektrolyt,- oder Funktionsschichten, an der Oberfläche des zentralen Bereichs des Trägersubstrats angeordnet ist und eine Elektrolytschicht gasdicht an den fluiddichten oberflächennahen Randbereich angrenzt. Der Schichtstapel kann beispielsweise durchphysikalische Beschichtungsverfahren wie physikalische Dampfabscheidung (PVD), Flammspritzen, Plasmaspritzen oder nasschemische Verfahren wie Siebdruck oder Nasspulverbeschichten aufgebracht werden, auch eine Kombination dieser Verfahren ist denkbar, und neben elektrochemisch aktiven Schichten zusätzliche Funktionsschichten aufweisen. So kann beispielsweise zwischen Trägersubstrat und der ersten Elektrodenschicht, meist einer Anodenschicht, eine Diffusionsbarriereschicht, beispielsweise aus Cer-Gadolinium-Oxid, vorgesehen sein. In einer bevorzugten Ausführungsform kann sich zu einer noch zuverlässigeren Trennung der beiden Prozessgasräume die gasdichte Elektrolytschicht mit ihrem gesamten Umfang zumindest auf einem Teil des fluiddichten oberflächennahen Randbereichs erstrecken, d.h. zumindest über einen Teil des gasdichten Randbereichs gezogen werden. Um eine Brennstoffzelle zu bilden, wird das Trägersubstrat am Umfang gasdicht mit einer Kontaktplatte (Interkonnektor) verbunden. Eine Anordnung mit einer Vielzahl von Brennstoffzellen bildet einen Brennstoffzellenstapel oder ein Brennstoffzellensystem.

Im Folgenden werden exemplarische Ausführungsbeispiele der vorliegenden Erfindung mit Verweis auf die folgenden Figuren detailliert beschrieben.
- Fig. 1: zeigt eine perspektivische Explosionsdarstellung einer Brennstoffzelle.
- Fig. 2: zeigt einen schematischen Querschnitt eines Teils eines beschichteten Trägersubstrat entlang der Linie I-II in Fig. 1
- Fig. 3: zeigt einen Querschliff eines Ausschnitts des porösen Trägersubstrats mit verpresstem Randbereich
- Fig. 4: zeigt Detailansichten des verpressten Randbereichs vor (links) und nach (rechts) einem thermischen Oberflächenbehandlungsschritt.

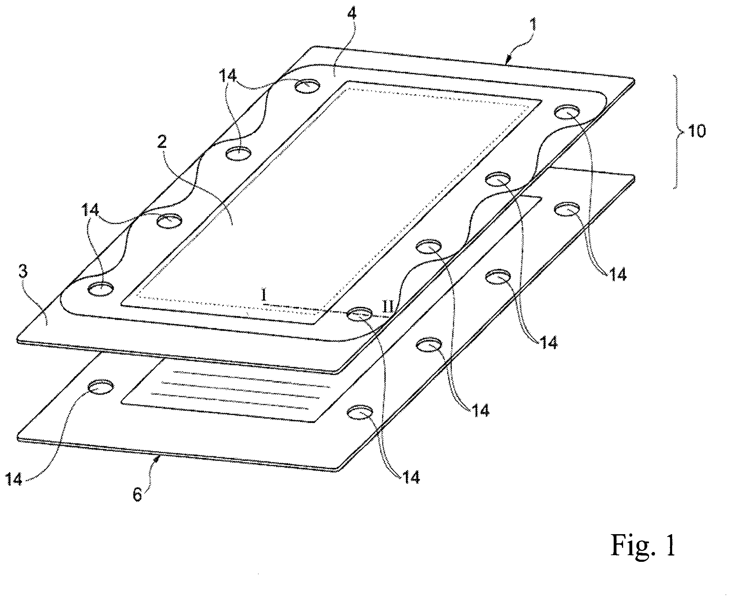

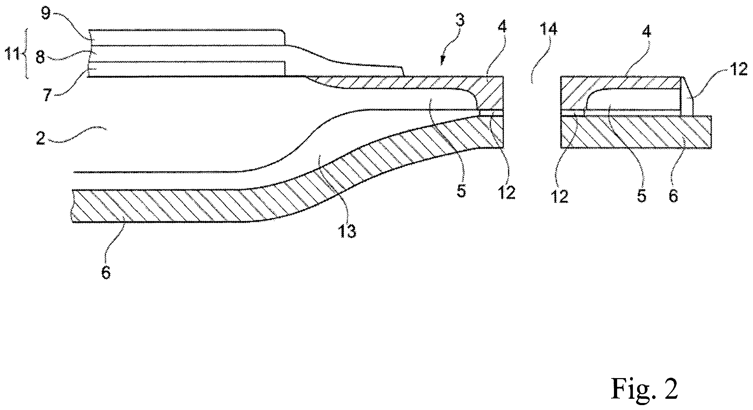

Fig.1 zeigt in schematischer Darstellung eine Brennstoffzelle (10), die aus einem pulvermetallurgisch hergestellten Trägersubstrat (1), das in einem zentralen Bereich (2) porös und gasdurchlässig ist und auf dem im zentralen Bereich (2) ein Schichtstapel (11) mit chemisch aktiven Schichten angeordnet ist, und einer Kontaktplatte (6) (Interkonnektor) besteht. Ein Teil des Trägersubstrats entlang der Linie I-II in Fig.1 ist in Fig.2 im Querschnitt dargestellt. Das Trägersubstrat (1) ist, wie anhand Fig.2 näher ausgeführt, im Randbereich (3), der den zentralen Bereich umrandet, verdichtet, wobei das Trägersubstrat im Randbereich auf der zell-zugewandten Seite an der Oberfläche durch einen Oberflächenbearbeitungsschritt, der zu oberflächlichem Aufschmelzen führt, nachbehandelt wurde. Das Verdichten des Randbereichs ist vorteilhaft, aber nicht zwingend erforderlich. Der die Schmelzphase aufweisende Oberflächenabschnitt (4) bildet eine gasdichte Barriere, die sich vom Außenumfang des zentralen Bereichs, an dem der gasdichte Elektrolyt (8) angrenzt, bis zu der Stelle, an dem das Trägersubstrat mittels einer Schweißnaht (12) mit der Kontaktplatte (6) gasdicht verbunden wird, erstreckt. Die Aufschmelztiefe ist entsprechend dem Erfordernis der Gasdichtheit zu bemessen, eine Aufschmelztiefe zwischen 15 µm und 60 µm hat sich als vorteilhaft herausgestellt. Die Restporosität des die Schmelzphase aufweisenden Oberflächenabschnitts (4) ist äußerst gering, die Porosität des darunterliegenden, nicht aufgeschmolzenen Bereichs (5) im Randbereich ist deutlich höher als die Restporosität des die Schmelzphase aufweisenden Oberflächenabschnitts, die Porosität des nicht aufgeschmolzenen Randbereichs liegt bevorzugt zwischen 4 und 20%. Im zentralen Bereich (2) des Trägersubstrats ist der Schichtstapel mit chemisch aktiven Schichten angeordnet, beginnend mit einer Anodenschicht (7), der gasdichten Elektrolytschicht (8), die sich zur besseren Abdichtung über einen Teil des gasdichten Randbereichs erstreckt, und einer Kathodenschicht (9). Das Trägersubstrat weist an zwei gegenüberliegenden Seiten im Randbereich Gasdurchtrittsöffnungen (14) auf, die der Zu- bzw. Abfuhr des Brenngases in bzw. aus dem Brenngasraum (13) dienen. Damit der Brenngasraum gasdicht abgeschlossen werden kann, erstreckt sich der die Schmelzphase aufweisende Oberflächenabschnitt zumindest über einen Teil des Randbereichs, der Gasdurchtrittsöffnungen, die für die Zu- und Ableitung der Prozessgase (Brenngas- und Oxidgase) vorgesehen sind, einschließt. Es wird dadurch eine horizontale gasdichte Barriere gebildet, die vom zentralen Bereich bis zu den Randkanten der Gasdurchtrittsöffnungen, die für die Zu- und Ableitung der Prozessgase vorgesehen sind, bzw. bis zu der Stelle, an der das Trägersubstrat mittels einer Schweißnaht (12) mit der Kontaktplatte (6) verbunden ist. Diese Schweißverbindung kann entlang des Außenumfangs des Trägersubstrats erfolgen, oder auch, wie in Fig.1 dargestellt, an einer etwas vom Außenumfang beabstandenden umlaufenden Linie. Wie aus Fig. 2 ersichtlich, ist dabei der Rand der Gasdurchtrittsöffnungen über die gesamte Dicke des Trägersubstrats aufgeschmolzen, um auch eine seitliche gasdichte Barriere zu bilden.

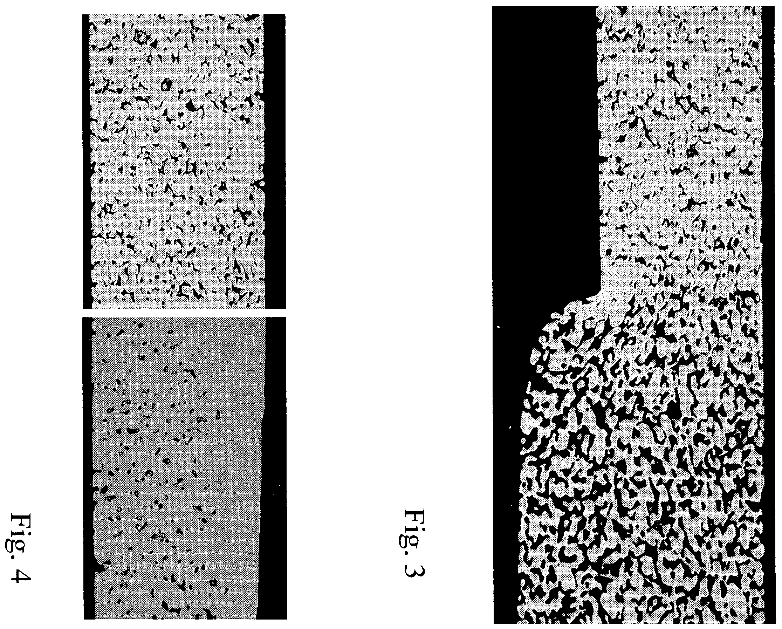

Fig. 3 und Fig. 4 zeigen eine REM -Aufnahme eines Querschliffs eines porösen Trägersubstrats mit verpresstem Randbereich und Detailansichten des verpressten Randbereichs vor (links) und nach (rechts) einem thermischen Oberflächenbehandlungsschritt durch Laseraufschmelzen. Ein Trägersubstrat aus einem abgesiebten Pulver aus einer Eisen-Chrom Legierung mit einer Partikelgröße kleiner 125 µm wird auf herkömmlichen pulvermetallurgischem Weg hergestellt. Nach der Sinterung weist das Trägersubstrat eine Porosität von ca. 40 Vol.-% auf. Der Randbereich wird anschließend durch uniaxiales Pressen verdichtet, sodass sich im Randbereich eine Restporosität von etwa 7-15 Vol.-% ergibt.
Ein fokussierter Laserstrahl mit Streckenenergie von etwa 250 J/m wird über den aufzuschmelzenden Randbereich geführt und bewirkt ein oberflächliches Aufschmelzen des Randbereichs. Im Fokuspunkt des Lasers entsteht eine Schmelzzone von etwa 100 µm Tiefe. Nach dem Erstarren bildet sich der erfindungsgemäße Oberflächenabschnitt, der eine Schmelzphase aufweist. Die Querschliffe erfolgen senkrecht zur Oberfläche des plattenförmigen Trägersubstrats. Zur Herstellung eines Querschliffs werden mittels einer Diamantdrahtsäge Teile aus dem Trägersubstrat herausgesägt, diese Teile werden in einem Einbettmittel (beispielsweise Epoxidharz) fixiert und nach Aushärtung geschliffen (sukzessive mit jeweils feinerem Schleifpapier). Anschließend werden die Proben mit einer Poliersuspension poliert und final elektrolytisch poliert.

Zur Bestimmung der Porosität der einzelnen Bereiche des Trägersubstrats werden diese Proben mittels REM (Rasterelektronenmikroskop) und einem BSE-Detetor (BSE: back-scattered-electrons; deutsch: rückgestreute Elektronen) (BSE-Detektor bzw. 4-Quadranten-Ring-Detektor) analysiert. Als Rasterelektronenmikroskop wurde dabei das Feldemissionsgerät "Ultra Pluss 55" der Firma Zeiss verwendet. Die REM-Aufnahme wird innerhalb einer auszuwertenden Messfläche jeweils mittels stereologischer Methoden quantitativ ausgewertet (verwendete Software: "Leica QWin"), wobei darauf geachtet wird, dass innerhalb der auszuwertenden Messfläche ein möglichst homogener Ausschnitt des Teils des Trägersubstrats vorliegt. Im Rahmen der Porositätsmessung wird der Flächenanteil der Poren relativ zu der gesamten, auszuwertenden Messfläche bestimmt. Dieser Flächenanteil entspricht gleichzeitig der Porosität in Vol.-%. Poren, die nur partiell innerhalb der auszuwertenden Messfläche liegen, werden beim Meßverfahren nicht mit berücksichtigt.
Für die REM-Aufnahme wurden folgende Einstellungen verwendet: Kippwinkel: 0°, Beschleunigungsspannung von 20 kV, Arbeitsabstand von ca. 10 mm und 250-fache Vergrößerung (Geräteangabe), was in einer horizontalen Bildkante von etwa 600 µm resultiert. Dabei wurde besonderer Wert auf eine sehr gute Bildschärfe gelegt.

Ergänzend ist darauf hinzuweisen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Pulvermetallurgisch hergestelltes plattenförmiges, poröses metallisches Trägersubstrat (1) für eine metallgestützte elektrochemische Funktionseinrichtung aufweisend einen zentralen Bereich (2) und einen Randbereich (3), wobei an einer Oberfläche des zentralen Bereichs an einer Zell-zugewandten Seite des Trägersubstrats ein Schichtstapel mit elektrochemisch aktiven Schichten anordbar ist, **dadurch gekennzeichnet, dass** ein Oberflächenabschnitt (4) des Randbereichs (3) auf der Zell-zugewandten Seite des Trägersubstrats eine Schmelzphase des Trägersubstratmaterials aufweist, und ein unter dem die Schmelzphase aufweisenden Oberflächenabschnitt (4) liegender Bereich (5) zumindest abschnittsweise eine höhere Porosität aufweist als der darüber angeordnete die Schmelzphase aufweisende Oberflächenabschnitt (4), wobei eine flächige Barriere entlang der Oberfläche des Trägersubstrats gebildet wird.

2. Trägersubstrat nach Anspruch 1, **dadurch gekennzeichnet, dass** der Randbereich eine höhere Dichte und eine geringere Porosität aufweist als der zentrale Bereich.

3. Trägersubstrat nach Anspruch 1 bis 2, **dadurch gekennzeichnet, dass** sich der die Schmelzphase aufweisende Oberflächenabschnitt, den Außenumfang des zentralen Bereichs (2) umlaufend, bis an die Außenkanten des Randbereichs (3) erstreckt.

4. Trägersubstrat nach Anspruch 1 bis 3, **dadurch gekennzeichnet, dass** sich der die Schmelzphase aufweisende Oberflächenabschnitt (4) in einer Richtung senkrecht zu der zell-zugewandten Seite des Trägersubstrats mindestens 1 µm von der Oberfläche ins Trägersubstrat hineinerstreckt.

5. Trägersubstrat nach einem der vorangehenden Ansprüche, **dadurch gekennzeichnet, dass** der die Schmelzphase aufweisende Oberflächenabschnitt (4) eine Restporosität von höchstens 2 % aufweist.

6. Trägersubstrat nach einem der vorangehenden Ansprüche, **dadurch gekennzeichnet, dass** es einstückig ausgebildet ist.

7. Trägersubstrat nach einem der vorangehenden Ansprüche, **dadurch gekennzeichnet, dass** der zentrale Bereich eine Porosität von 20 bis 60% aufweist und/oder der Randbereich (5) eine Porosität kleiner als 20% aufweist.

8. Trägersubstrat nach einem der vorangehenden Ansprüche, **dadurch gekennzeichnet, dass** das Trägersubstrat aus einer Fe-Cr Legierung besteht.

9. Trägersubstrat nach einem der vorangehenden Ansprüche, **dadurch gekennzeichnet, dass** sich der die Schmelzphase aufweisende Oberflächenabschnitt in der Umgebung von Kanten des Randbereichs über die gesamte Dicke des Trägersubstrats bis zur gegenüberliegenden Oberfläche hindurcherstreckt.

10. Trägersubstrat nach einem der vorangehenden Ansprüche, **dadurch gekennzeichnet, dass** der Randbereich mindestens eine Gasdurchtrittsöffnung aufweist.

11. Trägersubstratanordnung aufweisend ein Trägersubstrat nach Anspruch 1 bis 9, **dadurch gekennzeichnet, dass** die Trägersubstratanordnung weiters eine Rahmeneinrichtung aus elektrisch leitfähigem Material aufweist, die Rahmeneinrichtung das Trägersubstrat elektrisch kontaktiert und die Rahmeneinrichtung mindestens eine Gasdurchtrittsöffnung aufweist.

12. Brennstoffzelle, aufweisend mindestens ein Trägersubstrat nach Anspruch 10 oder eine Trägersubstratanordnung nach Anspruch 11, wobei ein Schichtstapel mit elektrochemisch aktiven Schichten an der Oberfläche des zentralen Bereichs des Trägersubstrats angeordnet ist und eine Elektrolytschicht der elektrochemisch aktiven Schichten überlappend mit dem die Schmelzphase aufweisenden Oberflächenabschnitt ausgebildet ist.

13. Verfahren zur Herstellung eines Trägersubstrats für eine metallgestützte elektrochemische Funktionseinrichtung, **dadurch gekennzeichnet, dass** dieses zumindest die folgenden Schritte umfasst:
• Pulvermetallurgisches Herstellen eines plattenförmigen Trägersubstrates mit einem zentralen Bereich und einen Randbereich, wobei an einer Oberfläche des zentralen Bereichs an einer Zell-zugewandten Seite des Trägersubstrats ein Schichtstapel mit elektrochemisch aktiven Schichten anordbar ist
• Nachbehandeln zumindest eines Teils des Randbereichs auf der Zell-zugewandten Seite des Trägersubstrats durch lokales, oberflächliches Aufschmelzen, wodurch eine flächige Barriere entlang der Oberfläche des Trägersubstrats gebildet wird.

14. Verfahren nach Anspruch 13, **dadurch gekennzeichnet, dass** vor dem oberflächlichem Aufschmelzen zumindest ein Teil des Randbereichs verdichtet wird, sodass er eine geringere Porosität aufweist als der zentrale Bereich des Trägersubstrats.

15. Verfahren nach Anspruch 13 oder 14, **dadurch gekennzeichnet, dass** im zentralen Bereich des Trägersubstrats ein Schichtstapel mit elektrochemisch aktiven Schichten aufgebracht wird.

## Claims

1. Plate-shaped, porous, metallic carrier substrate (1) produced by powder metallurgy and intended for a metal-supported electrochemical functional device, comprising a central region (2) and a marginal region (3), it being possible for a layer stack with electrochemically active layers to be arranged on a surface of the central region, on a cell-facing side of the carrier substrate, **characterized in that** a surface section (4) of the marginal region (3), on the cell-facing side of the carrier substrate, comprises a melt phase of the carrier substrate material, and at least sections of a region (5) located beneath the surface section (4) comprising the melt phase comprise a higher porosity than the surface section (4) arranged above them and comprising the melt phase, wherein an area-shaped barrier is built along the surface.

2. Carrier substrate according to Claim 1, **characterized in that** the marginal region has a higher density and a lower porosity than the central region.

3. Carrier substrate according to Claim 1 to 2, **characterized in that** the surface section comprising the melt phase extends, running around the outer periphery of the central region (2), to the outer edges of the marginal region (3).

4. Carrier substrate according to Claim 1 to 3, **characterized in that** the surface section (4) comprising the melt phase extends into the carrier substrate at least 1 µm from the surface in a direction perpendicular to the cell-facing side of the carrier substrate.

5. Carrier substrate according to any of the preceding claims, **characterized in that** the surface section (4) comprising the melt phase has a residual porosity of not more than 2%.

6. Carrier substrate according to any of the preceding claims, **characterized in that** it is of one-piece form.

7. Carrier substrate according to any of the preceding claims, **characterized in that** the central region has a porosity of 20% to 60% and/or the marginal region (5) has a porosity of less than 20%.

8. Carrier substrate according to any of the preceding claims, **characterized in that** the carrier substrate consists of an Fe-Cr alloy.

9. Carrier substrate according to any of the preceding claims, **characterized in that** the surface section comprising the melt phase extends, in the vicinity of edges of the marginal region, over the entire thickness of the carrier substrate through to the opposite surface.

10. Carrier substrate according to any of the preceding claims, **characterized in that** the marginal region comprises at least one gas passage.

11. Carrier substrate arrangement comprising a carrier substrate according to any of Claims 1 to 9, **characterized in that** the carrier substrate arrangement further comprises a frame device of electrically conductive material, where the frame device electrically contacts the carrier substrate, and the frame device comprises at least one gas passage.

12. Fuel cell comprising at least one carrier substrate according to Claim 10 or a carrier substrate arrangement according to Claim 11, in which a layer stack with electrochemically active layers is arranged on the surface of the central region of the carrier substrate, and an electrolyte layer of the electrochemically active layers is formed overlappingly with the surface section comprising the melt phase.

13. Method for producing a carrier substrate for a metal-supported, electrochemical functional device, **characterized in that** said method comprises at least the following steps:
• powder-metallurgically producing a plate-shaped carrier substrate comprising a central region and a marginal region, it being possible for a layer stack with electrochemically active layers to be arranged on a surface of the central region, on a cell-facing side of the carrier substrate;
• aftertreating at least a part of the marginal region, on the cell-facing side of the carrier substrate, by local, superficial melting, wherein an area-shaped barrier is built along the surface.

14. Method according to Claim 13, **characterized in that**, prior to the superficial melting, at least part of the marginal region is compacted, and so has a lower porosity than the central region of the carrier substrate.

15. Method according to Claim 13 or 14, **characterized in that** a layer stack with electrochemically active layers is applied in the central region of the carrier substrate.

## Revendications

1. Substrat support (1) métallique poreux, en forme de plaque fabriqué par métallurgie des poudres pour un dispositif fonctionnel électrochimique métallique présentant une zone centrale (2) et une zone de bord (3), dans lequel au niveau d'une surface de la zone centrale sur un côté du substrat support tourné vers la pile un empilement de couches avec des couches actives du point de vue électrochimique peut être agencé, **caractérisé en ce qu'**une section de surface (4) de la zone de bord (3) présente sur le côté du substrat support tourné vers la pile une phase de fusion du matériau de substrat support, et une zone (5) située sous la section de surface (4) présentant la phase de fusion présente au moins par section une porosité supérieure à celle de la section de surface (4) présentant la phase de fusion disposée au-dessus, dans lequel une barrière plane est formée le long de la surface du substrat support.

2. Substrat support selon la revendication 1, **caractérisé en ce que** la zone de bord présente une densité supérieure et une porosité inférieure à celles de la zone centrale.

3. Substrat support selon la revendication 1 à 2, **caractérisé en ce que** la section de surface présentant la phase de fusion, entourant la périphérie extérieure de la zone centrale (2), s'étend jusqu'aux arêtes extérieures de la zone de bord (3).

4. Substrat support selon la revendication 1 à 3, **caractérisé en ce que** la section de surface (4) présentant la phase de fusion s'étend dans une direction perpendiculaire au côté du substrat support tourné vers la pile au moins 1 µm de la surface dans le substrat support.

5. Substrat support selon l'une quelconque des revendications précédentes, **caractérisé en ce que** la section de surface (4) présentant la phase de fusion présente une porosité résiduelle d'au plus 2 %.

6. Substrat support selon l'une quelconque des revendications précédentes, **caractérisé en ce qu'**il est réalisé d'un seul tenant.

7. Substrat support selon l'une quelconque des revendications précédentes, **caractérisé en ce que** la zone centrale présente une porosité de 20 à 60 % et/ou la zone de bord (5) présente une porosité inférieure à 20 %.

8. Substrat support selon l'une quelconque des revendications précédentes, **caractérisé en ce que** le substrat support se compose d'un alliage Fe-Cr.

9. Substrat support selon l'une quelconque des revendications précédentes, **caractérisé en ce que** la section de surface présentant la phase de fusion s'étend aux alentours d'arêtes de la zone de bord sur toute l'épaisseur du substrat support jusqu'à la surface opposée.

10. Substrat support selon l'une quelconque des revendications précédentes, **caractérisé en ce que** la zone de bord présente au moins une ouverture de passage de gaz.

11. Ensemble de substrat support présentant un substrat support selon la revendication 1 à 9, **caractérisé en ce que** l'ensemble de substrat support présente en outre un moyen formant cadre en matériau électriquement conducteur, le moyen formant cadre est en contact électrique avec le substrat support et le moyen formant cadre présente au moins une ouverture de passage de gaz.

12. Pile à combustible, présente au moins un substrat support selon la revendication 10 ou un ensemble de substrat support selon la revendication 11, dans laquelle un empilement de couches avec des couches actives du point de vue électrochimique est agencé au niveau de la surface de la zone centrale du substrat support et une couche d'électrolyte des couches actives du point de vue électrochimique est réalisée par chevauchement avec la section de surface présentant la phase de fusion.

13. Procédé de fabrication d'un substrat support pour un dispositif fonctionnel électrochimique métallique, **caractérisé en ce que** celui-ci comprend au moins les étapes suivantes :
- fabrication par métallurgie des poudres d'un substrat support en forme de plaque avec une zone centrale et une zone de bord, dans lequel au niveau d'une surface de la zone centrale sur un côté du substrat support tourné vers la pile un empilement de couches avec des couches actives du point de vue électrochimique peut être agencé
- posttraitement d'au moins une partie de la zone de bord sur le côté du substrat support tourné vers la pile par fusion superficielle locale, ce par quoi une barrière plane est formée le long de la surface du substrat support.

14. Procédé selon la revendication 13, **caractérisé en ce qu'**avant la fusion superficielle au moins une partie de la zone de bord est comprimée, de sorte qu'elle présente une porosité inférieure à celle de la zone centrale du substrat support.

15. Procédé selon la revendication 13 ou 14, **caractérisé en ce qu'**un empilement de couches avec des couches actives du point de vue électrochimique est appliqué dans la zone centrale du substrat support.
